# EUROPÄISCHE PATENTSCHRIFT

(11) **EP 3 867 086 B1**
(45) Veröffentlichungstag und Bekanntmachung des Hinweises auf die Patenterteilung: **25.01.2023**
(21) Anmeldenummer: 19770048.7
(22) Anmeldetag: 17.09.2019
(51) Int. Cl.: B60G 7/00

(54) **FAHRWERKBAUTEIL FÜR EINE RADAUFHÄNGUNG SOWIE VERFAHREN ZUR HERSTELLUNG EINES FAHRWERKBAUTEILS**
CHASSIS COMPONENT FOR A WHEEL SUSPENSION AND METHOD FOR PRODUCING A CHASSIS COMPONENT
ÉLÉMENT DE TRAIN DE ROULEMENT CONÇU POUR UNE SUSPENSION DE ROUE ET PROCÉDÉ POUR PRODUIRE UN ÉLÉMENT DE TRAIN DE ROULEMENT

(30) Priorität: 15.10.2018 DE 102018217641
(43) Veröffentlichungstag der Anmeldung: 25.08.2021
(73) Patentinhaber: ZF Friedrichshafen AG, 88046 Friedrichshafen (DE)
(72) Erfinder: SIEVE, Manfred, 49393 Lohne (DE); BRONSWICK, Philipp, 49179 Ostercappeln (DE); PABST, Jan, 49082 Osnabrück (DE)
(74) Vertreter: ZF Friedrichshafen AG
(86) Internationale Anmeldenummer: PCT/EP2019/074799
(87) Internationale Veröffentlichungsnummer: WO 2020/078642

(56) Entgegenhaltungen:
- EP-A1- 2 266 821
- EP-A1- 3 124 295
- WO-A1-2005/061911
- DE-A1-102009 041 478
- DE-A1-102011 054 631
- DE-A1-102011 084 163
- DE-A1-102012 202 989
- DE-A1-102017 203 540
- DE-B3-102016 119 161

## Beschreibung

Die Erfindung betrifft ein Fahrwerkbauteil für eine Radaufhängung, umfassend eine zumindest eine Strebe aufweisende Strebenanordnung, die als ein Profil mit offener Querschnittsform ausgeführt ist, wobei die zumindest eine Strebe eine Profilbasis und zwei von dieser abgehende Wandabschnitte umfasst, wobei an zumindest einem Ende der Strebe ein Gelenkpunkt zur Aufnahme zweier beweglich miteinander verbundener Gelenkteile, einem einen kugelförmigen Gelenkkörper aufweisenden ersten Gelenkteil und einem den Gelenkkörper dreh- und/oder schwenkbar aufnehmenden Gelenkgehäuse als einem zweiten Gelenkteil, vorgesehen ist, wobei die Wandabschnitte im Bereich des zumindest einen Gelenkpunktes einander gegenüberliegend angeordnet eine erste Gelenkaufnahmeöffnung und eine zweite Gelenkaufnahmeöffnung aufweisen.

Des Weiteren betrifft die Erfindung ein Verfahren zur Herstellung eines Fahrwerkbauteils, umfassend eine zumindest eine Strebe aufweisende Strebenanordnung, die als ein Profilteil mit offener Querschnittsform hergestellt wird. Die zumindest eine Strebe umfasst eine Profilbasis und zwei von dieser abgehende Wandabschnitte. An zumindest einem Ende der Strebe wird ein Gelenkpunkt zur Aufnahme zweier beweglich miteinander verbundener Gelenkteile, einem einen kugelförmigen Gelenkkörper aufweisenden ersten Gelenkteil, und einem den Gelenkkörper dreh- und/oder schwenkbar aufnehmenden zweiten Gelenkteil, vorgesehen. Die Wandabschnitte weisen im Bereich des Gelenkpunktes einander gegenüberliegend angeordnete Gelenkaufnahmeöffnungen auf, in die das erste Gelenkteil eingeführt wird.

Aus der EP 2 266 821 A1 ist ein Fahrwerkbauteil mit den Merkmalen des Obergriffes des Patentanspruchs 1 bekannt, wobei hier der Gelenkkörper eingepresst ist.

Die DE 10 2011 084 163 A1 betrifft eine Erhöhung der Axialbelastung bei gespritzten Gelenkgehäusen und geht somit nicht von eingepressten Gelenkkörpern aus.

Ein Fahrwerkbauteil sowie ein Verfahren zur Herstellung eines Fahrwerkbauteils der eingangs genannten Art ist aus der DE 10 2013 002 285 A1 bekannt. Die Herstellung des Fahrwerkbauteils, insbesondere das Einbringen der beweglich miteinander verbundenen Gelenkteile, erfordert einen hohen Montageaufwand.

Ausgehend vom vorstehend beschriebenen Stand der Technik ist es nun die Aufgabe der vorliegenden Erfindung, ein Fahrwerkbauteil sowie ein Verfahren zur Herstellung eines Fahrwerkbauteils bereitzustellen, welche sich durch eine Vereinfachung der Montage auszeichnen.

Diese Aufgabe wird aus vorrichtungstechnischer Sicht ausgehend vom Oberbegriff des Anspruchs 1 in Verbindung mit dessen kennzeichnenden Merkmalen gelöst. Aus verfahrenstechnischer Sicht erfolgt eine Lösung der Aufgabe ausgehend vom Oberbegriff des nebengeordneten Anspruchs 12 in Verbindung mit dessen kennzeichnenden Merkmalen. Die hierauf jeweils folgenden, abhängigen Ansprüche geben jeweils vorteilhafte Weiterbildungen der Erfindung wieder.

Gemäß der Erfindung wird ein Fahrwerkbauteil für eine Radaufhängung, umfassend eine zumindest eine Strebe aufweisende Strebenanordnung, die als ein Profilteil mit offener Querschnittsform ausgeführt ist, wobei die zumindest eine Strebe eine Profilbasis und zwei von dieser abgehende Wandabschnitte umfasst, wobei an zumindest einem Ende der Strebe ein Gelenkpunkt zur Aufnahme zweier beweglich miteinander verbundener Gelenkteile, einem einen kugelförmigen Gelenkkörper aufweisenden ersten Gelenkteil und einem den Gelenkkörper dreh- und/oder schwenkbar aufnehmenden zweiten Gelenkteil, vorgesehen ist. Die Wandabschnitte weisen im Bereich des zumindest einen Gelenkpunktes einander gegenüberliegend angeordnet eine erste Gelenkaufnahmeöffnung und eine zweite Gelenkaufnahmeöffnung auf. Zur Vereinfachung der Montage ist erfindungsgemäß vorgesehen, dass der Gelenkkörper durch ein auf dem Gelenkkörper angeordnetes ringsegmentförmiges Befestigungselement zwischen der ersten und der zweiten Gelenkaufnahmeöffnung positioniert ist, wobei die Gelenkaufnahmeöffnungen und der dazwischenliegend positionierte Gelenkkörper in das durch Umspritzen hergestellte Gelenkgehäuse, das den zweiten Gelenkteil ausbildet, integriert sind.

Der Gelenkkörper wird mittels des Befestigungselements zwischen den Gelenkaufnahmeöffnungen positioniert und gehalten, wodurch der Vorgang des Umspritzens zur Herstellung des als zweiten Gelenkteil ausgebildeten Gelenkgehäuses vereinfacht wird. Durch das Umspritzen zur Herstellung des zweiten Gelenkteils entfallen die Montageschritte, mit dem das Gelenkgehäuse zwischen den Gelenkaufnahmeöffnungen eingebracht wird und der Gelenkkörper des ersten Gelenkteils in das Gelenkgehäuse eingepresst wird. Dabei bewirkt die Integration der Gelenkaufnahmeöffnungen und des Gelenkkörpers, dass zugleich eine formschlüssige Verbindung zwischen dem Gelenkgehäuse und dem Fahrwerkbauteil geschaffen wird. Zusätzlich bewirkt das Befestigungselement, dass ein Schrumpfen des aus einem Kunststoff hergestellten Gelenkgehäuses nicht dazu führt, dass sich der axiale Abstand zwischen den Gelenkaufnahmeöffnungen verändert, insbesondere verringert.

Das erste Gelenkteil ist bevorzugt ein formstabiler Körper. Insbesondere besteht das erste Gelenkteil aus Metall. Beispielsweise besteht das Gelenkteil aus einem Eisenwerkstoff, wie z.B. Stahl.

Das Fahrwerkbauteil ist bevorzugt ein formstabiler Körper. Insbesondere besteht das Fahrwerkbauteil aus Metall. Vorzugsweise besteht das Fahrwerkbauteil aus einem Eisenwerkstoff, wie z.B. Stahl. Beispielsweise besteht der Bauteilkörper aus Blech. Insbesondere ist das Fahrwerkbauteil ein Blechumformteil.

Bevorzugt kann das erste Gelenkteil mittels des Befestigungselementes durch einen Steck-Dreh-Verschluss zwischen den Gelenkaufnahmeöffnungen positioniert sein. Der Steck-Dreh-Verschluss ermöglicht ein formschlüssiges Halten des ersten Gelenkteils zwischen den Gelenkaufnahmeöffnungen, wodurch das anschließende Umspritzen prozesssicher durchführbar ist. Der Steck-Dreh-Verschluss ist nach Art eines Bajonettverschlusses ausgebildet.

Dem ersten Gelenkteil kann eine Längsachse zugeordnet sein, welche auch eine Längsachse des Gelenkpunktes bildet. Eine quer zur Längsachse und/oder quer zur axialen Richtung verlaufende Richtung wird insbesondere als radiale Richtung bezeichnet. Eine um die Längsachse herum verlaufende Richtung und/oder eine in Umfangsrichtung des Gelenkkörpers verlaufende Richtung werden insbesondere als Umfangsrichtung bezeichnet.

Die Gelenkaufnahmeöffnungen weisen jeweils sich axial erstreckende, einander zugewandte Abschnitte auf, die durch einen Spalt zueinander beabstandet sind. Die Gelenkaufnahmeöffnungen sind bevorzugt jeweils als Durchzug im Blech der Seitenwände ausgebildet, welche die Abschnitte ausbilden. Die freien Enden der Durchzüge sind zum Profilinneren hin ausgerichtet, woraus Einsparungen im Bauraum resultieren.

Gemäß einer Ausgestaltung ist ein Abschnitt einer der Gelenkaufnahmeöffnungen in Umfangsrichtung durch zumindest eine radiale Aussparung unterbrochen und am Außenumfang des Befestigungselementes ist zumindest ein radialer Vorsprung vorgesehen, der durch die zumindest eine radiale Aussparung in dem Abschnitt in axialer Richtung hindurchführbar. Der zumindest eine radiale Vorsprung des Befestigungselementes und die zumindest eine radiale Aussparung der Gelenkaufnahmeöffnung sind komplementär ausgebildet.

Dabei kann der zumindest eine radiale Vorsprung des Befestigungselementes eine im Wesentlichen hakenförmige oder L-förmige Kontur aufweisen. Der zumindest eine radiale Vorsprung wird durch die zumindest eine radiale Aussparung beim Einführen des ersten Gelenkteils in die Gelenkaufnahmeöffnung geführt. Bevorzugt können zumindest zwei radiale Vorsprünge sowie eine korrespondierende Anzahl an radialen Aussparungen vorgesehen sein. Insbesondere sind die radialen Vorsprünge des Befestigungselementes und die radialen Aussparungen an dem Abschnitt Gelenkaufnahmeöffnung in Umfangsrichtung im Wesentlichen symmetrisch verteilt angeordnet. Auf diese Weise kann der erste Gelenkteil gegen ein radiales Verschieben quer zur Längsachse des Gelenkkörpers gesichert werden.

Bevorzugt ist der Gelenkkörper in axialer Richtung einführbar, bis der zumindest eine radiale Vorsprung des Befestigungselementes den gegenüberliegenden, durch den Spalt beabstandeten Abschnitt der anderen Gelenkaufnahmeöffnung übergreift. Somit kann der gegenüberliegende Abschnitt der anderen Gelenkaufnahmeöffnung als axialer Anschlag für das Befestigungselement dienen, wenn sich das Befestigungselement im Bereich des Spaltes zwischen den beiden Gelenkaufnahmeöffnungen befindet. Durch eine Drehbewegung wird der zumindest eine radiale Vorsprung des Befestigungselementes in eine zur radialen Aussparung beabstandete Position überführt, in welcher sich geschlossene Bereiche der beiden Abschnitte der Gelenkaufnahmeöffnungen gegenüberliegen. Auf diese Weise wird der erste Gelenkteil gegen eine axiale Verschiebung in Richtung der zweiten Gelenkaufnahmeöffnung gesichert.

Gemäß einer Weiterbildung ist das Befestigungselement auf einer Lagerschale angeordnet, die auf dem Gelenkkörper angeordnet ist. Die Lagerschale wird auf den Gelenkkörper aufgepresst und ermöglicht die dreh- und/oder schwenkbare Aufnahme des Gelenkkörpers in dem durch Umspritzen hergestellten Gelenkgehäuse.

Insbesondere kann die Lagerschale einen radial hervorstehenden Axialanschlag aufweisen, an dem sich das Befestigungselement abstützt. Dabei kann das ringsegmentförmige Befestigungselement als ein Klemmteil ausgeführt sein, welches auf eine abschnittsweise umlaufende Nut in der Lagerschale aufgeschoben wird.

Gemäß einer bevorzugten Ausgestaltung kann in das Gelenkgehäuse ein Sensor integriert sein. Mittels des Sensors kann durch eine elektrische Auswerteeinrichtung die Winkelstellung des ersten Gelenkteils relativ zu dem zweiten Gelenkteil aufgenommen werden. Der Sensor kann als magnetoresistiver Sensor ausgeführt sein. Der Sensor wird dabei einem in einer Aufnahme an der Oberfläche des Gelenkkörpers eingelassenen Positionsmagneten zugeordnet.

Die Lagerschale ist mit einer Ausnehmung versehen ist, welche der abschnittsweisen Aufnahme des Sensors dient. In dieser Ausnehmung kann der dem als magnetoresistiven Sensor ausgeführten Sensor zugeordnete Positionsmagnet angeordnet sein. Der Sensor weist ein zylindrisches Gehäuse auf, welches abschnittsweise in die Ausnehmung einführbar ist. Dabei schließt das Gehäuse des Sensors im Wesentlichen bündig mit der Ausnehmung ab, so dass ein Eindringen von Material beim Umspritzen zur Herstellung des Gelenkgehäuses vermieden wird. Vorteilhaft an dieser Ausgestaltung ist zudem, dass der Sensor und der Positionsmagnet lediglich durch die Wandstärke der Lagerschale in diesem Bereich zueinander beabstandet sind. Die Integration des Sensors in das Gelenkgehäuse ermöglicht somit eine Anordnung mit sehr geringem Abstand zu dem Positionsmagneten.

Bevorzugt können die Abschnitte der Gelenkaufnahmeöffnungen jeweils eine gegenüberliegend angeordnete kreissegmentförmige Aussparung zur abschnittsweisen Hindurchführung des Sensors aufweisen. Die kreissegmentförmigen Aussparungen können auch der Ausrichtung des ersten Gelenkteils bzw. der darauf angeordneten Lagerschale dienen, damit nach dem Umspritzen eine senkrechte Orientierung des in das Gelenkgehäuse integrierten Sensors gewährleistet ist. Das nach dem Einsetzen zwischen die beiden Gelenkaufnahmeöffnungen durch das Befestigungselement positionierte erste Gelenkteil lässt sich in Umfangsrichtung um dessen Längsachse drehen, um die Ausnehmung auf der Lagerschale und die kreissegmentförmige Aussparung in eine im Wesentlichen fluchtende Anordnung zueinander zu bringen.

Ferner betrifft die Erfindung ein Verfahren zur Herstellung eines Fahrwerkbauteils, umfassend eine zumindest eine Strebe aufweisende Strebenanordnung, die als ein Profilteil mit offener Querschnittsform hergestellt wird, wobei die zumindest eine Strebe eine Profilbasis und zwei von dieser abgehende Wandabschnitte umfasst, wobei an zumindest einem Ende der Strebe ein Gelenkpunkt zur Aufnahme zweier beweglich miteinander verbundener Gelenkteile, einem einen kugelförmigen Gelenkkörper aufweisenden ersten Gelenkteil und einem den Gelenkkörper dreh- und/oder schwenkbar aufnehmenden zweiten Gelenkteil, vorgesehen wird, wobei die Wandabschnitte im Bereich des zumindest einen Gelenkpunktes einander gegenüberliegend angeordnet eine erste Gelenkaufnahmeöffnung und eine zweite Gelenkaufnahmeöffnung aufweisen, in die das erste Gelenkteil abschnittsweise eingeführt wird, wobei der Gelenkkörper durch ein auf dem Gelenkkörper angeordnetes ringsegmentförmiges Befestigungselement zwischen der ersten und der zweiten Gelenkaufnahmeöffnung positioniert wird, bevor die Gelenkaufnahmeöffnungen und der dazwischenliegende Gelenkkörper in ein durch Umspritzen hergestelltes Gelenkgehäuse, das den zweiten Gelenkteil ausbildet, integriert werden. Durch das Befestigungselement wird einerseits eine Positionierung des Gelenkkörpers zwischen den Gelenkaufnahmeöffnungen vor dem Umspritzen erreicht und andererseits eine Vorspannung zwischen den beiden Wandabschnitten im Bereich des Gelenkpunktes erzeugt, in denen die die Gelenkaufnahmeöffnungen angeordnet sind, die einem auftretenden Schwindungsverhalten des Gelenkgehäuses entgegengewirkt. Das als Profilteil ausgeführte Fahrwerkbauteil wird bevorzugt aus einem Stanzteil durch Blechumformung hergestellt.

Das Verfahren kann gemäß allen im Zusammenhang mit dem Fahrwerkbauteil erläuterten Ausgestaltungen weitergebildet werden.

Gemäß einer Weiterbildung kann das Positionieren des Gelenkkörpers in der Gelenkstelle vor dem Umspritzen durch eine Steck-Drehbewegung des Befestigungselementes durchgeführt werden. Das erste Gelenkteil kann dadurch axial und radial gegen ein ungewolltes Verschieben gesichert werden.

Dazu wird das Befestigungselement mit zumindest einem radialen Vorsprung hergestellt. Weiterhin wird ein Abschnitt einer der Gelenkaufnahmeöffnungen mit zumindest einer zu dem radialen Vorsprung komplementären Aussparung hergestellt. Das erste Gelenkteil wird gemeinsam mit dem darauf angeordneten Befestigungselement in axialer Richtung durch eine Steckbewegung in die Gelenkaufnahmeöffnung eingeführt, bis der zumindest eine radiale Vorsprung axial am Abschnitt der anderen Gelenkaufnahmeöffnung anliegt. Anschließend wird durch eine Drehbewegung in Umfangsrichtung der zumindest eine radiale Vorsprung gegenüber der zumindest Aussparung versetzt.

Bevorzugt kann ein an dem ersten Gelenkkörper angeordneter Sensor bezüglich einander gegenüberliegender kreissegmentförmiger Ausnehmungen an den Abschnitten der Gelenkaufnahmeöffnungen durch die Drehbewegung des Befestigungselementes ausgerichtet werden. An dem Sensor ist insbesondere eine Sensoranschlussstelle vorgesehen, an welche eine Signalleitung angebracht werden kann, um den Sensor mit einer externen Auswertevorrichtung zur Signalauswertung zu verbinden.

Eine vorteilhafte Ausführungsform der Erfindung, die nachfolgend erläutert wird, ist in den Zeichnungen dargestellt. Es zeigt:
- Fig. 1: eine perspektivische Teilansicht eines Fahrwerkbauteils mit einem ersten Gelenkteil;
- Fig. 2: eine perspektivische Teilansicht des Fahrwerkbauteils gemäß Fig. 1 mit einer auf das erste Gelenkteil aufgepressten Lagerschale;
- Fig. 3: eine perspektivische Teilansicht des Fahrwerkbauteils gemäß Fig. 2 mit einem auf der Lagerschale angeordneten Befestigungselement;
- Fig. 4: eine perspektivische Teilansicht des Fahrwerkbauteils gemäß Fig. 3 mit zwischen Gelenkaufnahmeöffnungen positioniertem erstem Gelenkteil;
- Fig. 5: eine perspektivische Teilansicht des Fahrwerkbauteils gemäß Fig. 4 mit dem gegen ein axiales Verschieben zwischen den Gelenkaufnahmeöffnungen gesicherten ersten Gelenkteil;
- Fig. 6: eine perspektivische Teilansicht des Fahrwerkbauteils gemäß Fig.5 mit einem in einer Aufnahme der Lagerschale angeordneten Sensor;
- Fig. 7: eine perspektivische Teilansicht des Fahrwerkbauteils gemäß Fig.6 mit einem durch Umspritzen hergestellten Gelenkgehäuse als zweites Gelenkbauteil, und
- Fig. 8: eine perspektivische Teilansicht des Fahrwerkbauteils gemäß Fig.7 mit transparent dargestelltem Gelenkgehäuse.

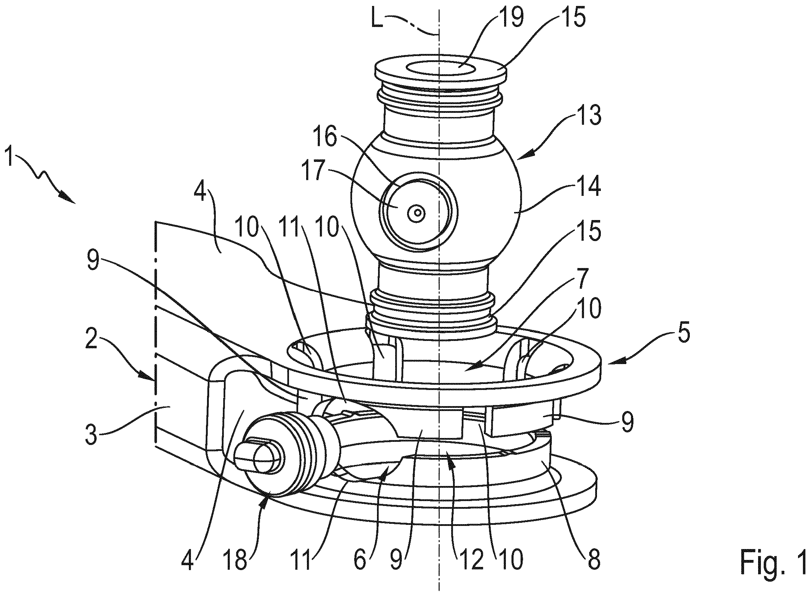

In Fig. 1 ist eine perspektivische Teilansicht eines profilierten Fahrwerkbauteils 1 mit einem ersten Gelenkteil 13 dargestellt. Das Fahrwerkbauteil 1 ist in dem dargestellten Ausführungsbeispiel als ein Zweipunktlenker ausgeführt. Das Fahrwerkbauteil 1 umfasst eine zumindest eine Strebe 2 aufweisende Strebenanordnung, die als ein Profilteil mit offener Querschnittsform ausgeführt ist. Das Profilteil wird aus einem Stanzteil aus Blech durch Blechumformung hergestellt. Die zumindest eine Strebe 2 umfasst eine Profilbasis 3 und zwei von dieser abgehende Seitenwände 4. Das Profilteil kann zumindest abschnittsweise einen im Wesentlichen U-förmigen Querschnitt aufweisen. An zumindest einem Ende der Strebe 2 ist ein Gelenkpunkt 5 zur Aufnahme zweier beweglich miteinander verbundener Gelenkteile vorgesehen. Einem einen kugelförmigen Gelenkkörper 14 aufweisenden ersten Gelenkteil 13 und einem den Gelenkkörper 14 dreh- und schwenkbar aufnehmenden Gelenkgehäuse 31 als einem zweiten Gelenkteil 30. Dem ersten Gelenkteil 13 ist eine Längsachse L zugeordnet, welche auch eine Längsachse des Gelenkpunktes 5 bildet. Eine quer zur Längsachse L und/oder quer zur axialen Richtung 27 verlaufende Richtung wird insbesondere als radiale Richtung bezeichnet. Eine um die Längsachse L herum verlaufende Richtung und/oder eine in Umfangsrichtung des Gelenkkörpers 14 verlaufende Richtung wird insbesondere als Umfangsrichtung bezeichnet.

In dem Gelenkpunkt 5 weist die Strebe 2 eine erste Gelenkaufnahmeöffnung 6 und eine zweite Gelenkaufnahmeöffnung 7 auf. Die beiden Gelenkaufnahmeöffnungen 6, 7 sind bevorzugt jeweils als Durchzug im Blech der Seitenwände 4 ausgebildet. Dabei sind die freien Enden der Durchzüge der Seitenwände 4 des Fahrwerkbauteils 1 zum Profilinneren hin gerichtet. Der Durchzug der ersten Gelenkaufnahmeöffnung 6 bildet einen axialen Abschnitt 8 aus, der eine nahezu geschlossene Mantelfläche aufweist, die nur an einer Stelle durch eine kreissegmentförmige Ausnehmung 11 unterbrochen ist. Der Durchzug der zweiten Gelenkaufnahmeöffnung 7 bildet einen gegenüberliegenden axialen Abschnitt 9 aus, der durch zumindest eine radiale Aussparung 10, im dargestellten Ausführungsbeispiel durch mehrere radiale Aussparungen 10, sowie eine kreissegmentförmige Ausnehmung 11 unterbrochen ist. Die kreissegmentförmigen Ausnehmungen 11 der beiden Gelenkaufnahmeöffnungen 6, 7 sind einander gegenüberliegend angeordnet und bilden eine annähernd kreisförmige Öffnung aus. Die kreisförmige Öffnung dient der Einführung und Positionierung eines Sensors 18 in der Gelenkstelle 5. Die einander gegenüberliegenden axialen Abschnitte 8 und 9 sind durch einen Spalt 12 zueinander beabstandet. Der Sensor 18 ist als magnetoresistiver Sensor ausgeführt.

Das erste Gelenkteil 13 weist an seinem kugelförmigen Gelenkkörper 14 zwei zylindrische Zapfen 15 auf, zwischen denen der Gelenkkörper 14 angeordnet ist. Auf der Oberfläche des Gelenkkörpers 14 ist eine kreiszylindrische Aussparung 16 vorgesehen, in der ein Positionsmagnet 17 eingelassen ist. Der Gelenkkörper 14 und die Zapfen 15 weisen eine Durchgangsbohrung 19 auf.

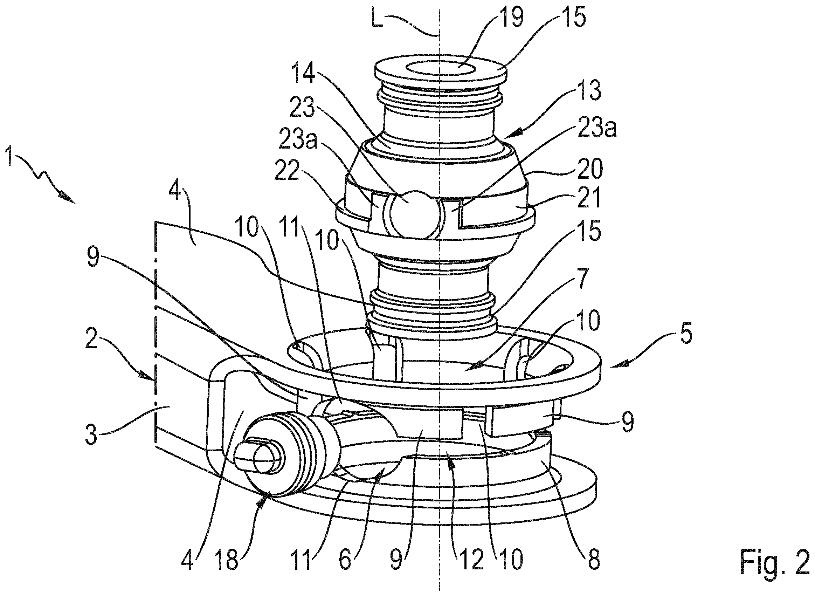

In Fig. 2 ist eine perspektivische Teilansicht des Fahrwerkbauteils 1 gemäß Fig. 1 mit einer auf das erste Gelenkteil 13 aufgepressten Lageschale 20 dargestellt. Die Lagerschale 20 ist mit einer abschnittsweise umlaufenden Nut 21 versehen, die durch eine, insbesondere kreiszylindrische, Ausnehmung 23 unterbrochen ist. Ein radial vorstehender Axialanschlag 22 auf der Mantelfläche der Lageschale 20 begrenzt die Nut 21 in axialer Richtung. Wandabschnitte 23a, welche die Ausnehmung 23 begrenzen, begrenzen die abschnittsweise umlaufende Nut 21 in radialer Richtung. Die Lagerschale 20 wird auf dem Gelenkkörper 14 derart positioniert, dass die Ausnehmung 23 fluchtend zu der Aussparung 16 an dem Gelenkkörper 14 angeordnet ist.

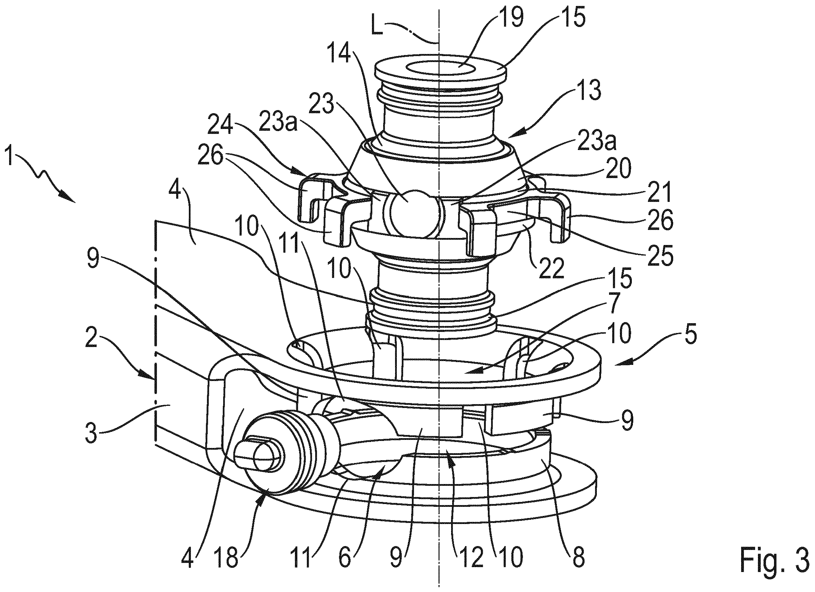

Fig. 3 zeigt eine perspektivische Teilansicht des Fahrwerkbauteils gemäß Fig. 2 mit einem auf der Lagerschale 20 angeordneten Befestigungselement 24. Das Befestigungselement 24 weist einen im Wesentlichen ringsegmentförmigen Grundkörper 25 auf, an dem radiale Vorsprünge 26 angeordnet sind. Die radialen Vorsprünge 26 sind im Wesentlichen hakenförmig oder L-förmig ausgebildet. Die Anzahl der radialen Vorsprünge 26 korrespondiert mit der Anzahl der Aussparungen 10 im Abschnitt 9 der zweiten Gelenkaufnahmeöffnung 7. Die radialen Vorsprünge 26 sind komplementär zu den Aussparungen 10 ausgebildet. Das Befestigungselement 24 besteht aus einem Kunststoff, und kann eine Elastizität aufweisen, die ein Aufschieben auf die Nut 21 ermöglicht. Das Befestigungselement 24 wird auf die Lagerschale 20 aufgeschoben, bis es an dem radial vorstehenden Axialanschlag 22 anliegt. In der Nut 21 wird das Befestigungselement 24 durch Klemmwirkung gehalten. In Umfangsrichtung kann das Befestigungselement 24 durch die beiden die Nut 21 unterbrechenden Wandabschnitte 23a der Ausnehmung 23 gegen ein Verdrehen gesichert werden. Die Anordnung des Befestigungselementes 24 auf der Lagerschale 20 kann vor oder nach dem Aufpressen der Lagerschale 20 auf dem Gelenkkörper 14 durchgeführt werden.

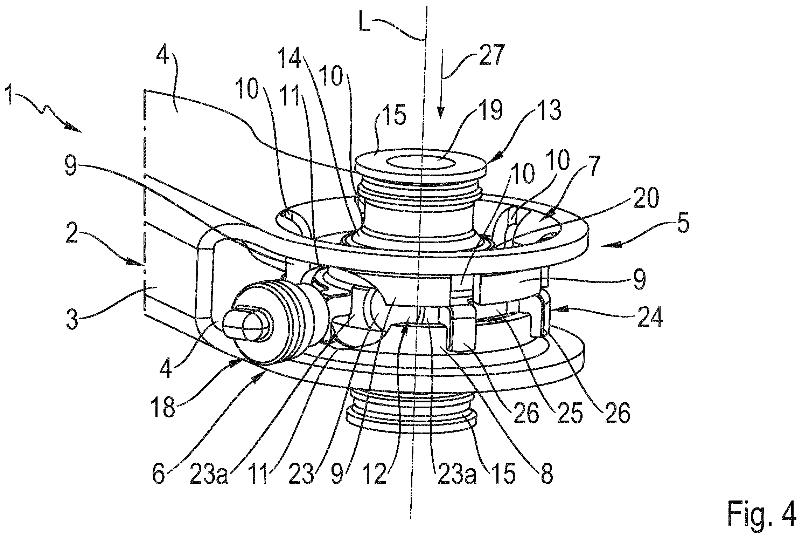

In Fig. 4 ist eine perspektivische Teilansicht des Fahrwerkbauteils 1 gemäß Fig. 3 mit dem zwischen der ersten Gelenkaufnahmeöffnung 6 und der zweiten Gelenkaufnahmeöffnung 7 positionierten ersten Gelenkteil 13 dargestellt. Das Gelenkteil 13 wird in axialer Richtung 27 von und der zweiten Gelenkaufnahmeöffnung 7 her in den Gelenkpunkt 5 eingeführt. Die radialen Vorsprünge 26 werden in den korrespondierenden Aussparungen 10 im Abschnitt 9 in axialer Richtung 27 geführt, bis die Vorsprünge 26 auf dem Abschnitt 8 aufliegen. Der Abschnitt 8 wird von den im Wesentlichen hakenförmigen oder L-förmigen Vorsprüngen 26 abschnittsweise formschlüssig umgriffen. Auf diese Weise wird das erste Gelenkteil 13 zwischen der ersten Gelenkaufnahmeöffnung 6 und der zweiten Gelenkaufnahmeöffnung 7 gegen ein radiales Verschieben bezüglich der Längsachse L gesichert. Zugleich wird hierdurch die Einführbewegung in axialer Richtung 27 begrenzt.

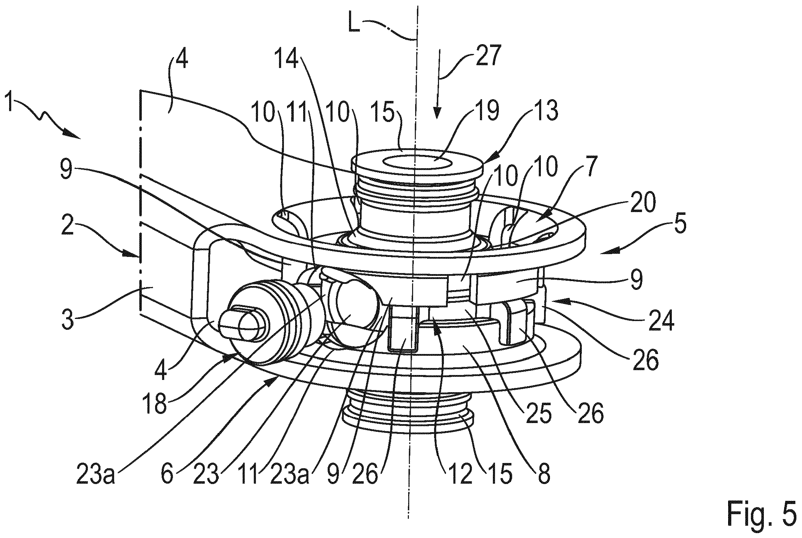

Fig. 5 zeigt eine perspektivische Teilansicht des Fahrwerkbauteils 1 gemäß Fig. 4 mit dem gegen ein axiales Verschieben zwischen den Gelenkaufnahmeöffnungen 6, 7 gesicherten ersten Gelenkteil 13. Hierzu wird das erste Gelenkteil 13 um seine Längsachse L abschnittsweise in Umfangsrichtung gedreht. Durch die Drehung werden die radialen Vorsprünge 26 in dem Spalt 12 aus dem Bereich der Aussparungen 10 im Abschnitt 9 der zweiten Gelenkaufnahmeöffnung 7 in einen Bereich bewegt, in welchem die Abschnitt 8, 9 der ersten und zweiten Gelenkaufnahmeöffnung 6, 7 unterbrechungsfrei ausgeführt sind. Dadurch wird das erste Gelenkbauteil 13 zusätzlich auch gegen eine axiale Bewegung entlang der Längsachse L gesichert. Das Verdrehen des ersten Gelenkteiles 13 und des darauf drehfest angeordneten Befestigungselementes 24 in Umfangsrichtung erfolgt, bis die Ausnehmung 23 im Wesentlichen fluchtend zu den kreissegmentförmigen Ausnehmungen 11 ausgerichtet ist.

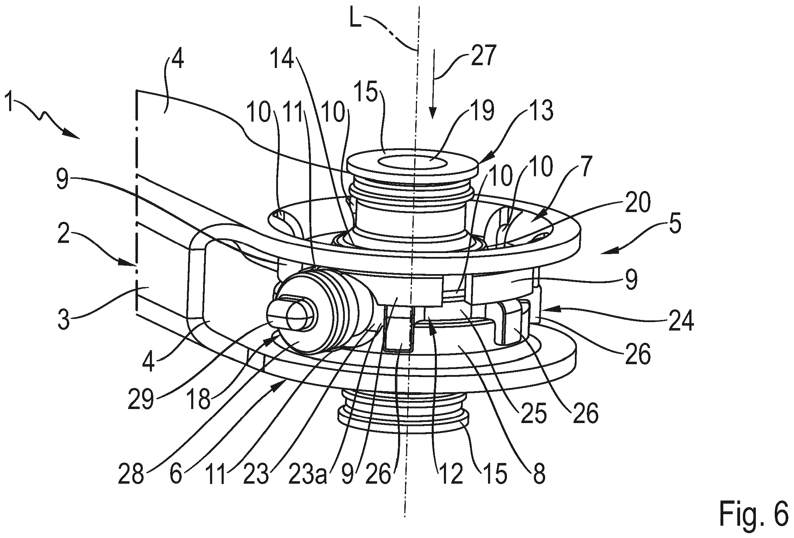

In Fig. 6 ist eine perspektivische Teilansicht des Fahrwerkbauteils 1 gemäß Fig.5 mit dem in der Ausnehmung 23 der Lagerschale 20 angeordneten Sensor 18 dargestellt. Der Sensor 18 weist ein zylindrisches Sensorgehäuse 28 auf. Das Sensorgehäuse 28 weist an seinem der Ausnehmung 23 zugewandten Ende einen Außendurchmesser auf, der mit dem Innendurchmesser der Ausnehmung 23 korrespondiert. Am gegenüberliegenden Ende des Sensorgehäuses 28 ist eine Anschlussstelle 29 angeordnet, die dem Anschluss einer Signalleitung dient. Wird das Sensorgehäuse 28 abschnittsweise in die Ausnehmung 23 eingeführt, so dichtet das Sensorgehäuse 28 die Ausnehmung 23 in Umfangsrichtung vollständig ab. Zugleich ist der Sensor 18 relativ zu dem ersten Gelenkteil 13 ausgerichtet. Der Abstand zwischen dem Sensor 18 und dem Positionsmagneten 17 entspricht dabei im Wesentlichen der Wandstärke der Lagerschale 20 im Bereich der Ausnehmung 23.

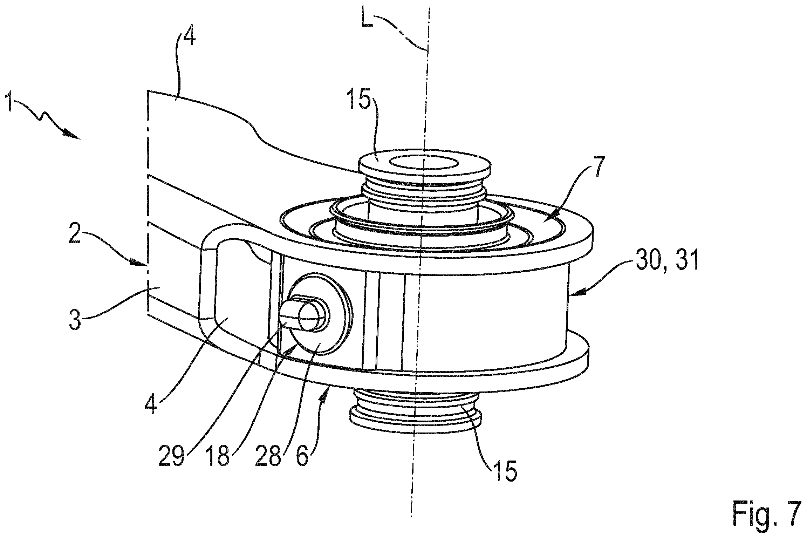

Fig. 7 zeigt eine perspektivische Teilansicht des Fahrwerkbauteils 1 gemäß Fig.6 mit einem durch Umspritzen mit einem Kunststoff hergestellten Gelenkgehäuse 31 als zweitem Gelenkbauteil 30. Hierzu wird das Fahrwerkbauteil 1 mit dem darin befestigten ersten Gelenkteil 13 in zumindest ein Werkzeug eingelegt. Der Bereich zwischen der ersten Gelenkaufnahmeöffnung 6 und der zweiten Gelenkaufnahmeöffnung 7 sowie außenseitige Bereiche der jeweiligen Gelenkaufnahmeöffnung 6, 7 um den durch die Lagerschale 20 bedeckten Gelenkkörper 13 des ersten Gelenkteils 13 werden umspritzt. Dadurch werden die Gelenkaufnahmeöffnungen 6, 7 und der dazwischenliegend positionierte erste Gelenkkörper 13 mit dem daran angeordneten Sensor 18 in das Gelenkgehäuse 31 integriert. Die Lagerhülse 20, das Befestigungselement 24 sowie die Abschnitte 8 und 9 der Gelenkaufnahmeöffnungen 6, 7 verhindern, dass während des Umspritzens Kunststoff in Bereiche des ersten Gelenkkörpers 13 gelangen können, die eine Dreh- und Schwenkbewegung zwischen dem ersten Gelenckörper 13 und dem zweiten Gelenkkörper 30 blockieren würden.

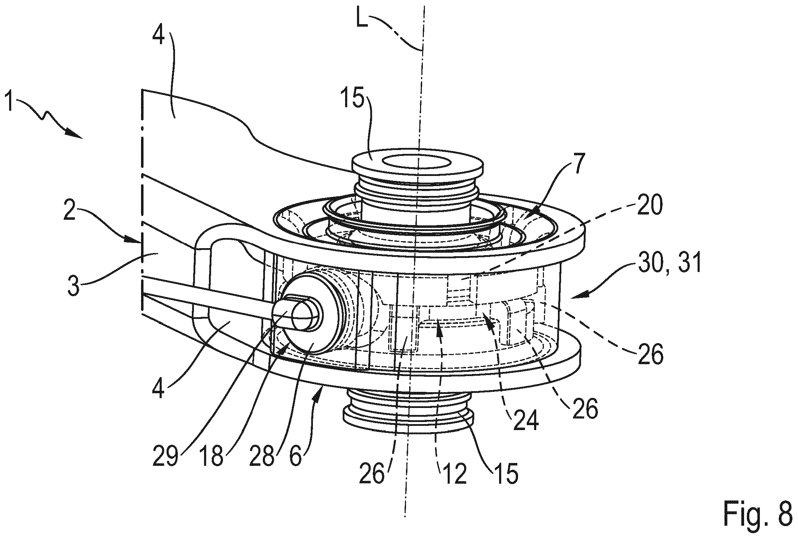

Einem Zusammenziehen der einander gegenüberliegenden Gelenkaufnahmeöffnungen 6, 7 durch Schwindung beim Auskühlen des durch Umspritzen hergestellten Gelenkgehäuses 31 wird durch das zwischen der ersten und der zweiten Gelenkaufnahmeöffnung 6, 7 angeordnete Befestigungselement 24 begegnet. Durch das Befestigungselement 24 wird eine in axialer Richtung 27 gerichtete Vorspannung zwischen den beiden Wandabschnitten 4 erzeugt, in denen die die Gelenkaufnahmeöffnungen 6, 7 angeordnet sind, die dem Schwindungsverhalten entgegengewirkt wird. In Fig. 8 ist eine perspektivische Teilansicht des Fahrwerkbauteils 1 gemäß Fig.7 mit transparent dargestelltem Gelenkgehäuse 31 gezeigt. Dies dient dazu, zu veranschaulichen, dass lediglich die von der Lagerschale 20 überdeckten Bereiche des Gelenkkörpers 14 zwischen der ersten und der zweiten Gelenkaufnahmeöffnung 6, 7 sowie auf den Außenseiten der beiden Gelenkaufnahmeöffnung 6, 7 umspritzt sind. Durch das Befestigungselement 24 wird die Breite des Spaltes 12 zwischen der ersten und der zweiten Gelenkaufnahmeöffnung 6, 7 respektive der axiale Abstand zwischen diesen aufrechterhalten.

### Bezuqszeichen

- 1: Lenker
- 2: Strebe
- 3: Profilbasis
- 4: Schenkelbereich
- 5: Gelenkpunkt
- 6: Erste Gelenkaufnahmeöffnung
- 7: Zweite Gelenkaufnahmeöffnung
- 8: Abschnitt von 6
- 9: Abschnitt von 7
- 10: Radiale Aussparung
- 11: Kreissegmentförmige Ausnehmung
- 12: Spalt
- 13: Erstes Gelenkteil
- 14: Gelenkkörper
- 15: Zapfen
- 16: Aussparung
- 17: Positionsmagnet
- 18: Sensor
- 19: Durchgangsbohrung
- 20: Gelenkhülse
- 21: Nut/Anlagefläche
- 22: Axialanschlag
- 23: Ausnehmung
- 23a: Wandabschnitt
- 24: Befestigungselement
- 25: Grundkörper
- 26: Radialer Vorsprung
- 27: Axiale Richtung
- 28: Sensorgehäuse
- 29: Anschlussstelle
- 30: Zweites Gelenkteil
- 31: Gelenkgehäuse

## Patentansprüche

1. Fahrwerkbauteil (1) für eine Radaufhängung, umfassend eine zumindest eine Strebe (2) aufweisende Strebenanordnung, die als ein Profilteil mit offener Querschnittsform ausgeführt ist, wobei die zumindest eine Strebe (2) eine Profilbasis (3) und zwei von dieser abgehende Wandabschnitte (4) umfasst, wobei an zumindest einem Ende der Strebe (2) ein Gelenkpunkt (5) zur Aufnahme zweier beweglich miteinander verbundener Gelenkteile (13, 30), einem einen kugelförmigen Gelenkkörper (14) aufweisenden ersten Gelenkteil (13) und einem den Gelenkkörper (14) dreh- und/oder schwenkbar aufnehmenden zweiten Gelenkteil (30), vorgesehen ist, wobei die Wandabschnitte (4) im Bereich des zumindest einen Gelenkpunktes (5) einander gegenüberliegend angeordnet eine erste Gelenkaufnahmeöffnung (6) und eine zweite Gelenkaufnahmeöffnung(7) aufweisen, **dadurch gekennzeichnet, dass** der Gelenkkörper (14) durch ein auf dem Gelenkkörper (14) angeordnetes ringsegmentförmiges Befestigungselement (24) zwischen der ersten und der zweiten Gelenkaufnahmeöffnung (6, 7) positioniert ist, wobei die Gelenkaufnahmeöffnungen (6, 7) und der dazwischenliegend positionierte Gelenkkörper (14) in ein durch Umspritzen hergestelltes Gelenkgehäuse (31), das den zweiten Gelenkteil (30) ausbildet, integriert sind.

2. Fahrwerkbauteil (1) nach Anspruch 1, **dadurch gekennzeichnet, dass** das erste Gelenkteil (13) mittels des Befestigungselementes (24) durch einen Steck-Dreh-Verschluss zwischen den Gelenkaufnahmeöffnungen (6, 7) positioniert ist.

3. Fahrwerkbauteil (1) nach Anspruch 1 oder 2, **dadurch gekennzeichnet, dass** die Gelenkaufnahmeöffnungen (6, 7) jeweils sich axial erstreckende, einander zugewandte Abschnitte (8. 9) aufweisen, die durch einen Spalt (12) zueinander beabstandet sind.

4. Fahrwerkbauteil (1) nach Anspruch 3, **dadurch gekennzeichnet, dass** ein Abschnitt (9) einer der Gelenkaufnahmeöffnungen (7) in Umfangsrichtung durch zumindest eine radiale Aussparung (10) unterbrochen ist und am Außenumfang des Befestigungselementes (24) zumindest ein radialer Vorsprung (26) vorgesehen ist, der durch die zumindest eine radiale Aussparung (10) in dem Abschnitt (9) hindurchführbar ist.

5. Fahrwerkbauteil (1) nach Anspruch 4, **dadurch gekennzeichnet, dass** der zumindest eine radiale Vorsprung (26) des Befestigungselementes (24) eine im Wesentlichen hakenförmige oder L-förmige Kontur aufweist.

6. Fahrwerkbauteil (1) nach Anspruch 5, **dadurch gekennzeichnet, dass** der Gelenckörper (13) in axialer Richtung (27) einführbar ist, bis der zumindest eine radiale Vorsprung (26) des Befestigungselementes (24) den gegenüberliegenden, durch den Spalt (12) beabstandeten, Abschnitt (8) der anderen Gelenkaufnahmeöffnung (6) übergreift.

7. Fahrwerkbauteil (1) nach einem der vorhergehenden Ansprüche, **dadurch gekennzeichnet, dass** das Befestigungselement (24) auf einer Lagerschale (20) angeordnet ist, die auf dem Gelenkkörper (14) angeordnet ist.

8. Fahrwerkbauteil (1) nach Anspruch 7, **dadurch gekennzeichnet, dass** die Lagerschale (20) einen radial hervorstehenden Axialanschlag (22) aufweist, an dem sich das Befestigungselement (24) abstützt.

9. Fahrwerkbauteil (1) nach einem der vorhergehenden Ansprüche, **dadurch gekennzeichnet, dass** in das Gelenkgehäuse (31) ein Sensor (18) integriert ist.

10. Fahrwerkbauteil (1) nach Anspruch 9, **dadurch gekennzeichnet, dass** die Lagerschale (20) mit einer Ausnehmung (23) versehen ist, welche der abschnittsweisen Aufnahme des Sensors (18) dient.

11. Fahrwerkbauteil (1) nach Anspruch 9 oder 10, **dadurch gekennzeichnet, dass** die Abschnitte (8. 9) jeweils eine gegenüberliegend angeordnete kreissegmentförmige Aussparung (11) zur abschnittsweisen Hindurchführung des Sensors (18) aufweisen.

12. Verfahren zur Herstellung eines Fahrwerkbauteils (1), umfassend eine zumindest eine Strebe (2) aufweisende Strebenanordnung, die als ein Profilteil mit offener Querschnittsform hergestellt wird, wobei die zumindest eine Strebe (2) eine Profilbasis (3) und zwei von dieser abgehende Wandabschnitte (4) umfasst, wobei an zumindest einem Ende der Strebe (2) ein Gelenkpunkt (5) zur Aufnahme zweier beweglich miteinander verbundener Gelenkteile (13, 30), einem einen kugelförmigen Gelenkkörper (14) aufweisenden ersten Gelenkteil (13) und einem den Gelenkkörper (14) dreh- und/oder schwenkbar aufnehmenden zweiten Gelenkteil (30), vorgesehen wird, wobei die Wandabschnitte (4) im Bereich des zumindest einen Gelenkpunktes (5) einander gegenüberliegend angeordnet eine erste Gelenkaufnahmeöffnung (6) und eine zweite Gelenkaufnahmeöffnung (7) aufweisen, in die das erste Gelenkteil (13) abschnittsweise eingeführt wird, **dadurch gekennzeichnet, dass** der Gelenkkörper (14) durch ein auf dem Gelenkkörper (14) angeordnetes ringsegmentförmiges Befestigungselement (24) zwischen der ersten und der zweiten Gelenkaufnahmeöffnungen (6, 7) positioniert wird, bevor die Gelenkaufnahmeöffnungen (6, 7) und der dazwischenliegende Gelenkkörper (14) in ein durch Umspritzen hergestelltes Gelenkgehäuse (31), das den zweiten Gelenkteil (30) ausbildet, integriert werden.

13. Verfahren nach Anspruch 12, **dadurch gekennzeichnet, dass** das Positionieren des Gelenkkörpers (14) durch eine Steck-Drehbewegung des Befestigungselementes (24) bewirkt wird.

14. Verfahren nach Anspruch 13, **dadurch gekennzeichnet, dass**
- das Befestigungselement (24) mit zumindest einem radialen Vorsprung (26) hergestellt wird,
- das ein Abschnitt (9) der zweiten Gelenkaufnahmeöffnungen (7) mit zumindest einer zu dem radialen Vorsprung (26) komplementären Aussparung (10) hergestellt wird,
- das erste Gelenkteil mit dem darauf angeordneten Befestigungselement (24) in axialer Richtung (27) durch eine Steckbewegung in die zweite Gelenkaufnahmeöffnung (7) eingeführt wird, bis der zumindest eine radiale Vorsprung axial am Abschnitt der anderen Gelenkaufnahmeöffnung anliegt,
- und das durch eine Drehbewegung in Umfangsrichtung der zumindest eine radiale Vorsprung (26) gegenüber der zumindest Aussparung (10) versetzt wird.

15. Verfahren nach einem der Ansprüche 12 bis 14, **dadurch gekennzeichnet, dass** ein an dem Gelenkkörper (14) angeordneter Sensor (18) bezüglich einander gegenüberliegender kreissegmentförmiger Ausnehmungen (11) an den Abschnitten (8, 9) der Gelenkaufnahmeöffnungen (6, 7) durch die Drehbewegung des Befestigungselementes (24) ausgerichtet wird.

## Claims

1. Chassis component (1) for a wheel suspension, comprising a strut arrangement which has at least one strut (2) and which is configured as a profile part with an open cross-sectional shape, wherein the at least one strut (2) comprises a profile base (3) and two wall portions (4) emanating therefrom, wherein a joint point (5) for receiving two movably interconnected joint parts (13, 30), a first joint part (13) having a spherical joint body (14) and a second joint part (30) rotatably and/or pivotably receiving the joint body (14), is provided at at least one end of the strut (2), wherein the wall portions (4) have, arranged opposite one another in the region of the at least one joint point (5), a first joint receiving opening (6) and a second joint receiving opening (7), **characterized in that** the joint body (14) is positioned between the first and the second joint receiving opening (6, 7) by way of a ring-segment-shaped fastening element (24) arranged on the joint body (14), wherein the joint receiving openings (6, 7) and the joint body (14) positioned therebetween are integrated into a joint housing (31) which is produced by overmoulding and which forms the second joint part (30).

2. Chassis component (1) according to Claim 1, **characterized in that** the first joint part (13) is positioned between the joint receiving openings (6, 7) by means of the fastening element (24) by way of a plug-in rotary closure.

3. Chassis component (1) according to Claim 1 or 2, **characterized in that** the joint receiving openings (6, 7) each have axially extending, mutually facing portions (8, 9) which are spaced apart from one another by a gap (12) .

4. Chassis component (1) according to Claim 3, **characterized in that** a portion (9) of one of the joint receiving openings (7) is interrupted in the circumferential direction by at least one radial cutout (10), and at least one radial projection (26), which can be guided through the at least one radial cutout (10) in the portion (9), is provided on the outer circumference of the fastening element (24).

5. Chassis component (1) according to Claim 4, **characterized in that** the at least one radial projection (26) of the fastening element (24) has a substantially hook-shaped or L-shaped contour.

6. Chassis component (1) according to Claim 5, **characterized in that** the joint body (13) can be introduced in the axial direction (27) until the at least one radial projection (26) of the fastening element (24) engages over the opposite portion (8), which is spaced apart by the gap (12), of the other joint receiving opening (6).

7. Chassis component (1) according to one of the preceding claims, **characterized in that** the fastening element (24) is arranged on a bearing shell (20) which is arranged on the joint body (14).

8. Chassis component (1) according to Claim 7, **characterized in that** the bearing shell (20) has a radially projecting axial stop (22) on which the fastening element (24) is supported.

9. Chassis component (1) according to one of the preceding claims, **characterized in that** a sensor (18) is integrated into the joint housing (31).

10. Chassis component (1) according to Claim 9, **characterized in that** the bearing shell (20) is provided with a recess (23) which serves for partially receiving the sensor (18).

11. Chassis component (1) according to Claim 9 or 10, **characterized in that** the portions (8, 9) each have an oppositely arranged circular-segment-shaped cutout (11) for partially guiding through the sensor (18).

12. Method for producing a chassis component (1), comprising a strut arrangement which has at least one strut (2) and which is produced as a profile part with an open cross-sectional shape, wherein the at least one strut (2) comprises a profile base (3) and two wall portions (4) emanating therefrom, wherein a joint point (5) for receiving two movably interconnected joint parts (13, 30), a first joint part (13) having a spherical joint body (14) and a second joint part (30) rotatably and/or pivotably receiving the joint body (14), is provided at at least one end of the strut (2), wherein the wall portions (4) have, arranged opposite one another in the region of the at least one joint point (5), a first joint receiving opening (6) and a second joint receiving opening (7) into which the first joint part (13) is partially introduced, **characterized in that** the joint body (14) is positioned between the first and the second joint receiving openings (6, 7) by way of a ring-segment-shaped fastening element (24) arranged on the joint body (14) before the joint receiving openings (6, 7) and the joint body (14) situated therebetween are integrated into a joint housing (31) which is produced by overmoulding and which forms the second joint part (30) .

13. Method according to Claim 12, **characterized in that** the positioning of the joint body (14) is brought about by a plug-in rotary movement of the fastening element (24) .

14. Method according to Claim 13, **characterized in that**
- the fastening element (24) is produced with at least one radial projection (26),
- a portion (9) of the second joint receiving openings (7) is produced with at least one cutout (10) which is complementary to the radial projection (26),
- the first joint part with the fastening element (24) arranged thereon is introduced into the second joint receiving opening (7) in the axial direction (27) by a plug-in movement until the at least one radial projection bears axially against the portion of the other joint receiving opening,
- and the at least one radial projection (26) is offset with respect to the at least one cutout (10) by a rotary movement in the circumferential direction.

15. Method according to one of Claims 12 to 14, **characterized in that** a sensor (18) arranged on the joint body (14) is oriented with respect to mutually opposite circular-segment-shaped recesses (11) on the portions (8, 9) of the joint receiving openings (6, 7) by the rotary movement of the fastening element (24).

## Revendications

1. Composant de châssis (1) pour une suspension de roue, comprenant un agencement d'entretoise présentant au moins une entretoise (2), qui est réalisée sous la forme d'une partie profilé avec une forme de section transversale ouverte, l'au moins une entretoise (2) comprenant une base profilée (3) et deux sections de paroi (4) partant de celle-ci, un point d'articulation (5) étant prévu à au moins une extrémité de l'entretoise (2) pour recevoir deux parties d'articulation (13, 30) reliées entre elles de manière mobile, une première partie d'articulation (13) présentant un corps d'articulation sphérique (14) et une deuxième partie d'articulation (30) recevant le corps d'articulation (14) de manière rotative et/ou pivotante, les sections de paroi (4) présentant, dans la zone de l'au moins un point d'articulation (5), une première ouverture de réception d'articulation (6) et une deuxième ouverture de réception d'articulation (7) agencées l'une en face de l'autre, **caractérisé en ce que** le corps d'articulation (14) est positionné entre la première et la deuxième ouverture de réception d'articulation (6, 7) par un élément de fixation (24) en forme de segment annulaire agencé sur le corps d'articulation (14), les ouvertures de réception d'articulation (6, 7) et le corps d'articulation (14) positionné entre elles étant intégrés dans un boîtier d'articulation (31) fabriqué par surmoulage, qui forme la deuxième partie d'articulation (30).

2. Composant de châssis (1) selon la revendication 1, **caractérisé en ce que** la première partie d'articulation (13) est positionnée entre les ouvertures de réception d'articulation (6, 7) au moyen de l'élément de fixation (24) par une fermeture à enfichage et à rotation.

3. Composant de châssis (1) selon la revendication 1 ou 2, **caractérisé en ce que** les ouvertures de réception d'articulation (6, 7) présentent respectivement des sections (8, 9) s'étendant axialement, tournées l'une vers l'autre, qui sont espacées l'une de l'autre par une fente (12).

4. Composant de châssis (1) selon la revendication 3, **caractérisé en ce qu'**une section (9) de l'une des ouvertures de réception d'articulation (7) est interrompue dans la direction périphérique par au moins un évidement radial (10) et au moins une saillie radiale (26) est prévue sur la périphérie extérieure de l'élément de fixation (24), qui peut passer à travers l'au moins un évidement radial (10) dans la section (9).

5. Composant de châssis (1) selon la revendication 4, **caractérisé en ce que** l'au moins une saillie radiale (26) de l'élément de fixation (24) présente un contour essentiellement en forme de crochet ou en forme de L.

6. Composant de châssis (1) selon la revendication 5, **caractérisé en ce que** le corps d'articulation (13) peut être introduit dans la direction axiale (27) jusqu'à ce que l'au moins une saillie radiale (26) de l'élément de fixation (24) vienne en prise au-dessus de la section opposée (8) de l'autre ouverture de réception d'articulation (6), espacée par la fente (12).

7. Composant de châssis (1) selon l'une quelconque des revendications précédentes, **caractérisé en ce que** l'élément de fixation (24) est agencé sur une coquille de coussinet (20) qui est agencée sur le corps d'articulation (14).

8. Composant de châssis (1) selon la revendication 7, **caractérisé en ce que** la coquille de coussinet (20) présente une butée axiale (22) faisant saillie radialement, sur laquelle l'élément de fixation (24) s'appuie.

9. Composant de châssis (1) selon l'une quelconque des revendications précédentes, **caractérisé en ce qu'**un capteur (18) est intégré dans le boîtier d'articulation (31) .

10. Composant de châssis (1) selon la revendication 9, **caractérisé en ce que** la coquille de coussinet (20) est pourvue d'un évidement (23) qui sert à recevoir le capteur (18) par sections.

11. Composant de châssis (1) selon la revendication 9 ou 10, **caractérisé en ce que** les sections (8, 9) présentent chacune un évidement (11) en forme de segment de cercle, agencé en face, pour le passage par section du capteur (18).

12. Procédé de fabrication d'un composant de châssis (1), comprenant un agencement d'entretoise présentant au moins une entretoise (2), qui est réalisée sous la forme d'une partie profilée avec une forme de section transversale ouverte, l'au moins une entretoise (2) comprenant une base profilée (3) et deux sections de paroi (4) partant de celle-ci, un point d'articulation (5) étant prévu à au moins une extrémité de l'entretoise (2) pour recevoir deux parties d'articulation (13, 30) reliées entre elles de manière mobile, une première partie d'articulation (13) présentant un corps d'articulation sphérique (14) et une deuxième partie d'articulation (30) recevant le corps d'articulation (14) de manière rotative et/ou pivotante, les sections de paroi (4) présentant, dans la zone de l'au moins un point d'articulation (5), une première ouverture de réception d'articulation (6) et une deuxième ouverture de réception d'articulation (7) agencées l'une en face de l'autre, dans lesquelles la première partie d'articulation (13) est introduite par sections, **caractérisé en ce que** le corps d'articulation (14) est positionné entre la première et la deuxième ouverture de réception d'articulation (6, 7) par un élément de fixation (24) en forme de segment annulaire agencé sur le corps d'articulation (14), avant que les ouvertures de réception d'articulation (6, 7) et le corps d'articulation (14) situé entre elles ne soient intégrés dans un boîtier d'articulation (31) fabriqué par surmoulage, qui forme la deuxième partie d'articulation (30) .

13. Procédé selon la revendication 12, **caractérisé en ce que** le positionnement du corps de l'articulation (14) est effectué par un mouvement d'enfichage et de rotation de l'élément de fixation (24).

14. Procédé selon la revendication 13, **caractérisé en ce que**
- l'élément de fixation (24) est fabriqué avec au moins une saillie radiale (26),
- une section (9) des deuxièmes ouvertures de réception d'articulation (7) est fabriquée avec au moins un évidement (10) complémentaire de la saillie radiale (26) ,
- la première partie d'articulation avec l'élément de fixation (24) agencé sur celle-ci est introduite dans la direction axiale (27) par un mouvement d'enfichage dans la deuxième ouverture de réception d'articulation (7) jusqu'à ce que l'au moins une saillie radiale s'applique axialement contre la section de l'autre ouverture de réception d'articulation,
- et, par un mouvement de rotation dans la direction périphérique, l'au moins une saillie radiale (26) est déplacée par rapport à l'au moins un évidement (10).

15. Procédé selon l'une quelconque des revendications 12 à 14, **caractérisé en ce qu'**un capteur (18) agencé sur le corps d'articulation (14) est orienté par rapport à des évidements (11) en forme de segments de cercle en face les uns des autres sur les sections (8, 9) des ouvertures de réception d'articulation (6, 7) par le mouvement de rotation de l'élément de fixation (24).
